# EUROPÄISCHE PATENTANMELDUNG

(11) **EP 4 364 860 A1**
(43) Veröffentlichungstag der Anmeldung: **08.05.2024**
(21) Anmeldenummer: 23203230.0
(22) Anmeldetag: 12.10.2023
(51) Int. Cl.: B05D 1/02, B05D 5/02

(54) **VERFAHREN ZUR HERSTELLUNG EINES BESCHICHTETEN FLÄCHENGEBILDES**

(30) Priorität: 03.11.2022 DE 102022004106
(71) Anmelder: SpanSet secutex Sicherheitstechnik GmbH, 52511 Geilenkirchen (DE)
(72) Erfinder: FRANKE, Boris, 52525 Heinsberg (DE)
(74) Vertreter: Taubert, Diana

(57) **Zusammenfassung**

Die Erfindung betrifft ein beschichtetes Flächengebilde mit rutschhemmenden Eigenschaften und ein Verfahren zu dessen Herstellung, wobei in einem ersten Schritt ein Strukturieren einer Oberfläche einer ersten Seite des Flächengebildes oder des gesamten Flächengebildes erfolgt und in einem zweiten Schritt eine der ersten Seite gegenüberliegende zweite Seite des Flächengebildes durch Besprühen der Oberfläche der zweiten Seite mit einem in einer definierten Reaktionszeit gelierenden Kunststoff strukturiert wird.

## Beschreibung

Die Erfindung betrifft ein beschichtetes Flächengebilde mit rutschhemmenden Eigenschaften und ein Verfahren zu dessen Herstellung.

Flächengebilde mit rutschhemmenden Eigenschaften, so zum Beispiel Antirutschmatten aus Polyurethan, müssen gemäß der Normung VDI 2700 beidseitig strukturiert sein. Dieses lässt sich bei Gießelastomeren bisher nur über die Produktion von Matten im Rahmen eines bekannten Gussverfahrens in geschlossenen Formen realisieren. Dabei weisen die Matten stets eine definierte Dicke auf, die eine Steifigkeit des beschichteten Flächengebildes mit sich bringt.

Im Rahmen der Fertigung ist es stets notwendig, für unterschiedliche Matten, beispielhaft aus einem Kunststoff, so zum Beispiel aus einem Gießelastomer, verschiedene Formen herzustellen, was kostenintensiv ist. Die Herstellung in geschlossenen Formen lässt nur limitierte Plattengrößen zu. Darüber hinaus lassen sich keine Platten herstellen, die eine sehr geringe Höhe besitzen.

Die Aufgabe der Erfindung besteht darin, die vorbeschriebenen Nachteile des Standes der Technik zu beseitigen und ein Flächengebilde mit rutschhemmenden Eigenschaften, so beispielhaft in Form einer Antirutschmatte, bereitzustellen, welche optimierter zu fertigen ist.

Diese Aufgabe wird erfindungsgemäß durch ein Verfahren mit den Merkmalen des Hauptanspruchs 1 und ein Flächengebilde nach Anspruch 7, das durch dieses Verfahren hergestellt wird, gelöst, wobei die Unteransprüche weitere erfindungsgemäße Ausgestaltungsvarianten dieser Lösungen beinhalten.

Danach wird ein erfindungsgemäßes Flächengebilde mit einem definierten Reibbeiwert mit rutschhemmenden Eigenschaften durch folgende Verfahrensschritte gefertigt.

Zu erwähnen ist, dass das Flächengebilde beispielhaft aus einem Kunststoff gefertigt sein kann, so einem Gießelastomer. Im Rahmen der Erfindung kommt beispielhaft ebenfalls ein Flächengebilde aus einem Presswerkstoff aus nachwachsenden Rohstoffen in Betracht. Diese Angabe ist jedoch nicht abschließend und im Rahmen der Erfindung nur beispielhaft zu verstehen.

Im Rahmen eines einheitlichen Verfahrens erfolgt im ersten Schritt ein Strukturieren einer Oberfläche einer ersten Seite des Flächengebildes oder des gesamten Flächengebildes durch ein bekanntes Formgebungsverfahren, beispielhaft durch Materialentnahme, so durch ein spanendes oder nicht spanendes Verfahren, wie zum Beispiel Fräsen oder Ätzen, indem auf der ersten Seite Vertiefungen erzeugt werden. Ferner kommt ein Umformverfahren, so zum Beispiel Prägen, in Betracht oder auch eine Formgebung durch einen Materialauftrag, wie ein Lackieren oder ein Laminieren.

Die durch das Formgebungsverfahren geschaffenen Strukturen besitzen eine derartige Gestalt, dass die Funktionalität des Flächengebildes nicht eingeschränkt ist. Eine Materialentnahme erfolgt beispielhaft danach nur beschränkt in einem geringen Prozentsatz in Bezug auf die Dicke des Flächengebildes.

Das Strukturieren der ersten Seite des Flächengebildes erfolgt in Form eines Musters und/oder in Form von Zahlen und/oder Buchstaben, so beispielhaft in Form einer Beschriftung mit einer Herstellerangabe und/oder technischen Angaben, so dem Reibbeiwert. Das Muster kann regel- oder unregelmäßig sein.

Sodann erfolgt in einem zweiten Schritt ein Strukturieren, ein Auftragen einer Beschichtung, einer der ersten Seite gegenüberliegenden zweiten Seite des Flächengebildes durch ein Besprühen der Oberfläche der zweiten Seite mit einem in einer definierten Reaktionszeit, einem reaktionsschnellen gelierenden Kunststoff, wobei sich erfindungsgemäß während des Besprühens der Abstand eines Sprühkopfes, aus dem der Kunststoff austritt, um auf die Oberfläche der zweiten Seite des Flächengebildes aufgetragen zu werden, relativ zu dem zu besprühenden Flächengebilde vergrößert.

Es erfolgt eine Relativbewegung, wobei sich der Abstand des Sprühkopfes relativ zu dem zu besprühenden Flächengebilde gleichförmig und/oder stufenweise vergrößern kann.

Im Rahmen der Erfindung ist es ebenfalls gelegen, dass sich der Abstand des Sprühkopfes relativ zu dem zu besprühenden Flächengebilde stufenweise in mindestens einem Schritt vergrößern kann.

In weiterer Ausgestaltung des Verfahrens ist vorgesehen, dass, während sich der Abstand des Sprühkopfes zu dem zu besprühenden Flächengebilde relativ zu diesem vergrößert, der Sprühvorgang unterbrochen ist. Dies kann sich vorteilhaft auf die Strukturbildung auswirken. Wird beispielhaft der Sprühkopf über eine größere Fläche horizontal bewegt, um das Flächengebilde zu besprühen, so wird nach Beendigung dieses Teilabschnitts der Sprühvorgang unterbrochen und der Abstand des Sprühkopfes von dem zu besprühenden Flächengebilde wird sodann vergrößert. Nach Abschluss dieses Vorgangs wird das Besprühen wieder aufgenommen.

Als Kunststoff kommt beispielhaft ein Gießelastomer, insbesondere auch ein zweikomponentiges Gießelastomer, in Betracht, so beispielsweise Polyurea oder ein Polyurethan.

Das Besprühen erfolgt mittels einer üblichen Sprühanlage mit mindestens einem Sprühkopf. Insbesondere kann eine Hochdrucksprühanlage zum Einsatz kommen. Unter Sprühkopf im Sinne der Erfindung ist jede Vorrichtung zu verstehen, die geeignet ist, eine entsprechende Flüssigkeit, mithin einen vorbeschriebenen Kunststoff, durch ein bekanntes Sprühverfahren auf die Oberfläche der zweiten Seite des Flächengebildes aufzutragen.

Durch das erfindungsgemäße Verfahren wird erreicht, dass durch die Vergrößerung des Abstandes des Sprühkopfes von der zu besprühenden Oberfläche, das heißt des zu besprühenden Flächengebildes, der auf die Oberfläche aufgebrachte Kunststoff in Form von Tröpfchen mit seiner definierten Reaktionszeit bereits kurz vor oder beim Auftreffen auf die Oberfläche geliert und dadurch eine strukturierte, tröpfchenartige Oberflächenstruktur gebildet wird. Die Dauer der Reaktionszeit des gelierenden Kunststoffs und der Abstand des Sprühkopfes von der Oberfläche der zu besprühenden zweiten Seite des Flächengebildes beeinflussen dabei die Oberflächenstruktur, so ihre Grobheit. Diese Parameter können auch während des Produktionsprozesses verändert werden, sodass ein oder mehrere Schichten oder Bereiche unterschiedlicher Grobheit erzeugt werden können.

Durch das vorgeschriebene Verfahren ist ein Flächengebilde mit einem definierten Reibbeiwert der ersten und der zweiten Seite, zumindest jedoch der zweiten Seite des Flächengebildes, mit einer Beschichtung herstellbar, wobei das Flächengebilde vorzugsweise, jedoch nicht erfindungsnotwendig, aus einem Kunststoff besteht.

Mithilfe des erfindungsgemäßen Verfahrens können Flächengebilde in Form von Antirutschmatten mit einer geringen Dicke und der vorgeschriebenen beidseitigen Struktur in einem einheitlichen Produktionsverfahren hergestellt werden. Darüber hinaus besteht mehr Variabilität bei der Größe eines beispielhaften Erzeugnisses, so einer herzustellenden Antirutschmatte, zum Beispiel in Plattenform. Es sind Platten jeglicher Größe herstellbar. Des Weiteren bedarf es keiner geschlossenen Form, was die Herstellungskosten reduziert.

Die Erfindung wird nachfolgend anhand eines Ausführungsbeispiels unter Bezugnahme auf die Figuren weiter erläutert. Dabei ergeben sich weitere Vorteile, Merkmale und Ausgestaltungen der Erfindung.

Es zeigen:
**Fig. 1** eine schematische Darstellung eines erfindungsgemäßen Flächengebildes mit der ersten Seite 2 sichtbar dargestellt,
**Fig. 2** eine schematische Darstellung eines erfindungsgemäßen Flächengebildes mit der zweiten Seite **3** sichtbar dargestellt.

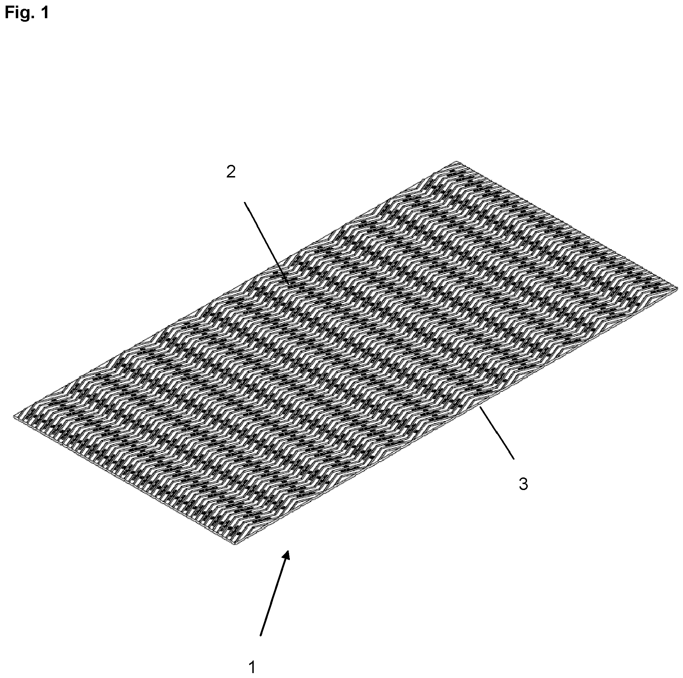

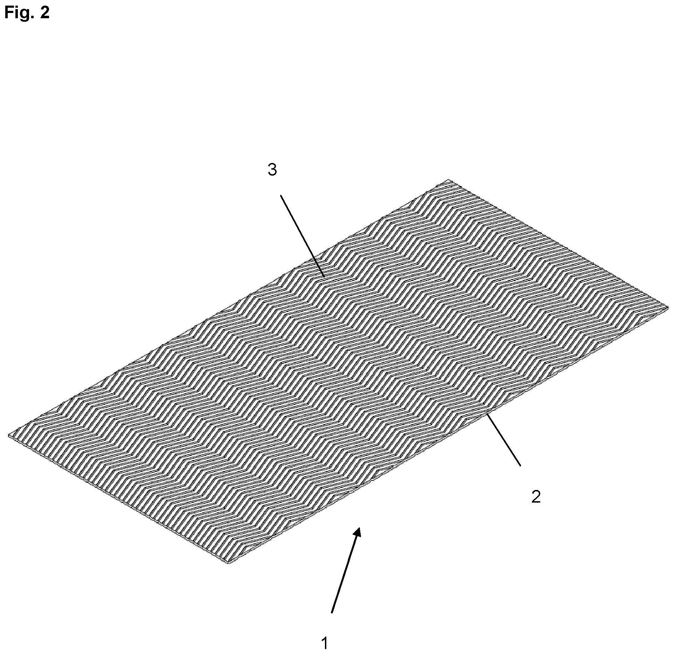

**Fig. 1** und **Fig. 2** zeigen ein Flächengebilde **1** mit einem definierten Reibbeiwert einer ersten Seite **2** und einer zweiten Seite **3,** das aus einem Kunststoff mit einer Beschichtung besteht, das nach dem erfindungsgemäßen Verfahren hergestellt ist. Die Bezeichnung des Herstellers und die Angabe eines Reibbeiwerts sind auf der ersten Seite **2** für den Nutzer des Flächengebildes **1** sichtbar angeordnet.

Im Ausführungsbeispiel wurde das Flächengebilde **1** dadurch hergestellt, dass zuerst ein Strukturieren einer Oberfläche der ersten Seite **2** des Flächengebildes **1** durch Fräsen eines Fischgrätmusters, einer Bezeichnung, die des Herstellers, und des Reibbeiwerts erfolgt. Sodann erfolgt das Strukturieren, also das Auftragen einer Beschichtung, der der ersten Seite **2** gegenüberliegenden zweiten Seite **3** des Flächengebildes **1** durch Besprühen der Oberfläche der zweiten Seite **3** mit einem in einer definierten Reaktionszeit, einem besonders reaktionsschnellen gelierenden zweikomponentigen Gießelastomer, wobei während des Besprühens sich der Abstand eines Sprühkopfes, aus dem der Kunststoff austritt, um auf die Oberfläche der zweiten Seite **3** des Flächengebildes **1** aufgetragen zu werden, relativ zu dem zu besprühenden Flächengebilde **1** vergrößert.

So wird erreicht, dass durch die Vergrößerung des Abstandes des Sprühkopfes von der zu besprühenden Oberfläche im Fertigungsverfahren der auf die Oberfläche aufgebrachte Kunststoff in Form von Tröpfchen mit seiner definierten Reaktionszeit bereits beim Auftreffen auf die Oberfläche der zweiten Seite **3** geliert und dadurch eine strukturierte, tröpfchenartige Oberflächenstruktur bildet.

### Bezugszeichenliste:

1. Flächengebilde
2. erste Seite
3. zweite Seite

## Patentansprüche

1. Verfahren zur Herstellung eines Flächengebildes (1) mit rutschhemmenden Eigenschaften mit folgenden Schritten:
a. Strukturieren einer Oberfläche einer ersten Seite (2) des Flächengebildes (1) oder des gesamten Flächengebildes (1) durch ein Formgebungsverfahren in Form eines Musters und/oder in Form von Zahlen und/oder Buchstaben,
b. Strukturieren einer der ersten Seite (2) gegenüberliegenden zweiten Seite (3) des Flächengebildes(1) durch Besprühen der Oberfläche der zweiten Seite (3) mit einem in einer definierten Reaktionszeit gelierenden Kunststoff, wobei während des Besprühens sich der Abstand eines Sprühkopfes, aus dem der Kunststoff austritt, um auf die Oberfläche der zweiten Seite (3) des Flächengebildes (1) aufgetragen zu werden, relativ zu dem zu besprühenden Flächengebilde (1) vergrößert.

2. Verfahren nach Anspruch 1, wobei sich der Abstand des Sprühkopfes relativ zu dem zu besprühenden Flächengebilde (1) gleichförmig und/oder stufenweise vergrößert.

3. Verfahren nach einem der vorherigen Ansprüche, wobei sich der Abstand des Sprühkopfes relativ zu dem zu besprühenden Flächengebilde (1) stufenweise in mindestens einem Schritt vergrößert.

4. Verfahren nach einem der vorherigen Ansprüche, wobei, während sich der Abstand des Sprühkopfes zu dem zu besprühenden Flächengebilde (1) vergrößert, der Sprühvorgang unterbrochen ist.

5. Verfahren nach einem der vorherigen Ansprüche, wobei der Kunststoff ein Gießelastomer ist, beispielsweise Polyurea oder ein Polyurethan.

6. Verfahren nach einem der vorherigen Ansprüche, wobei das Besprühen mittels einer Sprühanlage mit mindestens einem Sprühkopf, insbesondere einer Hochdrucksprühanlage, erfolgt.

7. Flächengebilde (1) mit einem definierten Reibbeiwert einer ersten und einer zweiten Seite (2), (3) mit einer Beschichtung, das nach einem Verfahren gemäß einer der Ansprüche 1 bis 6 hergestellt ist.
